# EUROPÄISCHE PATENTSCHRIFT

(11) **EP 1 364 582 B1**
(45) Veröffentlichungstag und Bekanntmachung des Hinweises auf die Patenterteilung: **13.07.2005**
(21) Anmeldenummer: 03450126.2
(22) Anmeldetag: 20.05.2003
(51) Int. Cl.: A23C 9/142, A23C 9/13

(54) **Gesäuertes Milchprodukt und Verfahren zur Herstellung desselben**
Acidified milk product and process for its preparation
Produit laitier acide et procédé pour sa preparation

(30) Priorität: 21.05.2002 AT 7732002
(43) Veröffentlichungstag der Anmeldung: 26.11.2003
(73) Patentinhaber: Pinzgau Milch registrierte Genossenschaft mit beschränkter Haftung, 5751 Maishofen (AT)
(72) Erfinder: Fill, Engelbert, Dipl.-Ing., 6322 Kirchbichl (AT); Osl, Thomas, 6300 Wörgl (AT); Obermayr, Harald, Dipl.-Ing., 4540 Bad Hall (AT)
(74) Vertreter: Wildhack, Helmut, Dipl.-Ing. Dr.

(56) Entgegenhaltungen:
- EP-A- 1 025 762
- FR-A- 2 809 595
- COLDEWEY I: "MEMBRANTECHNOLOGIE EROEFFNET EINE FUELLE VON MOEGLICHKEITEN" DEUTSCHE MILCHWIRTSCHAFT, HILDESHEIM, DE, Bd. 45, Nr. 4, 1994, Seiten 180-183, XP009014783 ISSN: 0012-0480
- KAILASAPATHY K ET AL: "EFFECT OF MEMBRANE CONCENTRATED COTTAGE CHEESE WHEY ON YOGHURT PRODUCTION" FOOD AUSTRALIA, NORTH SYDNEY, AU, Bd. 48, Nr. 6, Juni 1996 (1996-06), Seiten 281-284, XP009014773 ISSN: 1032-5298
- KELLY J ET AL: "DESALINATION OF ACID CASEIN WHEY BY NANOFILTRATION" INTERNATIONAL DAIRY JOURNAL, ELSEVIER APPLIED SCIENCE, BARKING,, GB, Bd. 5, Nr. 3, 1995, Seiten 291-303, XP001030160 ISSN: 0958-6946
- SANDERSON W B: "OPPORTUNITIES FOR WHEY & PERMEATE POWDERS" CSIRO FOOD RESEARCH QUARTERLY, MELBOURNE, AU, Bd. 51, Nr. 1/2, 1991, Seiten 29-31, XP009014775 ISSN: 0310-9070

## Beschreibung

Die vorliegende Erfindung betrifft ein neues Joghurt bzw. ein darauf basierendes, mit Zusätzen, wie Aromen, Sirupen, Konfitüren, Früchten, Genussmitteln, Süßungsmitteln u.dgl. versetztes Nahrungsmittel- bzw. Dessertprodukt od.dgl., dessen wesentlicher Bestandteil durch, bevorzugt pasteurisierte, Milch und/oder Magermilch gebildet ist.

Sie betrifft weiters ein neues Verfahren zur Herstellung des neuen Joghurts.

Eine der neueren Entwicklungen auch auf dem Gebiet der Molkereiprodukte betrifft das steigende Gesundheitsbewusstsein weiter Kreise der Konsumenten und deren Forderungen nach ernährungsphysiologisch günstigeren Nahrungsmitteln. So werden in steigendem Maße fettreduzierte und generell energiereduzierte Produkte nachgefragt.

Gleichzeitig ist der allgemeine Trend der Konsumenten zu beobachten, sich nicht mehr mit jenen geschmacklichen und organoleptischen Qualitäten von Milchprodukten zufrieden zu geben, welche dieselben seit Jahrzehnten aufweisen.

So besteht heute auch bei Molkereiprodukten mit herabgesetzten Fettgehalten, wie z.B. fettarmen Topfen-, Quark- und Joghurtsorten, die Erwartung, dass diese nicht "mehlig" oder "sandig" sind oder gar eine Art von Kratzempfindung im Mund und beim Schlucken auslösen. Vielmehr wird eine etwa samtartige, glatte, geschmeidige Konsistenz gefordert, und dies bei einer Produktpalette, welche insbesondere im Falle von Joghurt, von der trinkflüssigen bis zur stichfesten Konsistenz reicht.

Die vorliegende Erfindung hat sich nun das Ziel gesetzt, die bisher für die Herstellung von Joghurt angewandte Produktionstechnologie derart zu verändem, dass die angeführten Wünsche und Anforderungen an diese Produktgruppe besser als bisher befriedigt werden können.

Ein Ziel war daher eine teilweise Abtrennung von Milchsalzen, um die sensorische Qualität der Produkte zu verbessern. Ein zweites Ziel war eine Veränderung der Textur hin zu einer festeren, glatten, cremigeren Gelstruktur. Eingehende Untersuchungen haben gezeigt, dass dieses Ziel durch eine Teilentmineralisierung des Rohstoffes Milch und in besonders hohem Maße durch eine spezifische Teilentmineralisierung bezüglich der einwertigen Ionen erreicht werden kann. Als besonders geeignet für diese spezifische Teilentmineralisierung hat sich das Verfahren der Nanofiltration erwiesen, eine Technologie zur Trennung von Feststoffen und Wasser, wie eben Milch, in
a) Wasser, Stickstoff-Verbindungen nicht eiweißartiger Natur, einwertige Mineralstoffe, wie Chlor, Natrium, Kalium einerseits, und in
b) die übrigen Feststoffe, wie Eiweiß, Fett, Lactose, Mineralstoffe mit hoherwertigen Ionen anderseits, die aufkonzentriert werden auf z.B. 17 bis 23 % Trockenmasse, wenn man z.B. von Vollmilch ausgeht.

Die Nanofiltration nimmt eine Stellung zwischen der Ultrafiltration, einer reinen Abtrennung von Eiweißstoffen, und der Umkehr-Osmose, einer reinen Konzentriertechnik ein. Dieser Sachverhalt gilt auch für den typischen Betriebsdruck: Dieser liegt bei der Ultrafiltration bei etwa 5 bar, bei der Reversosmose bei über 30 bar und bei der Nanofiltration bei etwa 10 bis 25 bar. Die einschlägige Fachliteratur gibt keine klare Schnittstellendefinition, es werden immer nur ungefähre Poren- und Trenngrenzen angegeben:

Die Arbeitsbereiche der angeführten Membran-Trennverfahren liegen im Mittel bei:

| **Trenn-Verfahren** | **Porengröße nm** | **Mol-Masse (Ausschlussgrenze)** |
|---|---|---|
| Ultrafiltration | 10⁺¹ - 10⁺² | 10.000 - 25.000 (100.000) |
| Nanofiltration | 10⁺⁰ - 10⁺¹ | 100 - 1.000 |
| Umkehrosmose | 10⁻¹ - 10⁻⁰ | < 100 |

Die Größenverhältnisse der Milchinhaltsstoffe untereinander sind im wesentlichen die Folgenden:

| **Produkt** | **Partikel** - Ø **in nm (n. Kessler)** |
|---|---|
| Wasser | ca. 0,3 nm |
| Chlorid | ca. 0,4 nm |
| Milchsalze | 0,6 - 0,7 nm |
| Lactose | 0,8 nm |
| Molkenproteine | 3 - 5 nm |
| Kaseinmicellen | 50 - 130 nm |
| Viren | 30 - 300 nm |
| Bakterien | 300 - 1000 nm |

In Bezug auf die Anwendung von Filtrationstechniken bei der Verarbeitung von Magermilch und Molke existiert wenig Literatur und es ist hier auf Standardwerke der Milchwissenschaften zu verweisen, wie etwa:
- Jennes/Patton "Grundzüge der Milchenergie"
- ZFL, Sonderdruck "Membrantrennverfahren in der Lebensmittelindustrie"
- H.G. Kessler "Molkereitechnologie"
- Rautenbach/Rauch "Membranverfahren zur wirtschaftlichen Aufbereitung von Molke"
- Auszüge aus "IDF Special issue 9201; New Applications of Membrane Processes"
- Molkereitechnik, Band 44, "Ultrafiltration"

Aus der EP 1025762 A ist eine Milch-Calcium-Zusammensetzung bekannt geworden, bei deren Herstellung Milch zuerst mittels Ultrafiltration konzentriert wird, wonach eine gewöhnliche Säuerung zur Entfernung Kaseins aus dem ultrafiltrierten Produkt erfolgt. Es ist dort keine Säuerung mittels Kultur vorgesehen.

Die Herstellung des in der FR 2809595 A beschriebenen Milch-Finalproduktes geht über insgesamt drei Filtrations-Stufen steigender Feinheit, wobei in der letzten Stufe eine Nanofiltration erfolgt. Das so gewonnene, Milchzucker, Calcium und Phosphate enthaltende Nanofiltrations-Retentat muss dann mit den im Zuge einer vorhergegangenen Ultrafiltrations-Stufe als Retentat gewonnenen Proteinen zusammengeführt werden.

Weiters ist zur Publikation "Deutsche Milchwirtschaft", Hildesheim (1994), 45(4)180-183 zu bemerken, dass dort eine Vorkonzentrierung von Milch und Molke mittels Nanofiltration beschrieben ist. Joghurt wird erwähnt, jedoch ist dort nur ein Einsatz von nanokonzentrierter Milch - in welcher Folge der Nanofiltration, infolge der dabei stattfindenden selektiven Teilentsalzung, die Lactose und somit der süße Geschmack des Konzentrats in den Vordergrund tritt - als süßender "Zusatzstoff" zu Joghurt vorgesehen.

Die Veröffentlichung "Food Australia, North Sydney (06-1996) 48(6) 281-284 behandelt die Erzeugung von Joghurt, wobei als Basis für dasselbe übliche pasteurisierte Milch und beispielsweise 25 % mittels Nanofiltration konzentrierte Molke als Vorprodukte genannt sind.

Die Publikation International Dairy Journal, Elsevier, Barking (1995) 5(3)291-303 ist zu entnehmen, dass es der Nanolfiltrations-Technik zur Entsalzung von sauren Kasein-Molken beschreibt.

Die Literaturstelle "Csiro Food Research Quarterly, Melbourne (1991) 51(½) 29-31 behandelt die Herstellung von Molke- und Permeat-Pulvern und es ist dort die Rede von einer Demineralisierung von Molke durch Nanofiltration.

Gegenstand der Erfindung ist somit gemäß **Anspruch** 1 ein neues Joghurt der eingangs genannten Art, welches die im kennzeichnenden Teil dieses Anspruches angeführten Merkmale aufweist.

Einige wesentliche Vorteile des erfindungsgemäßen, der Entmineralisierung bzw. Entsalzung unter Einsatz der Nanofiltrationstechnik unterworfene Ausgangsprodukte enthaltenden Joghurts sind im Folgenden aufgezählt:
- Es ist in seiner Qualität nicht mehr direkt mit den bisher bekannten, an sich hochqualitativen derartigen Joghurt-Produkten vergleichbar, was deren Konsistenz, Rührverhalten, Geschmeidigkeit, Mund-, Rachen- und Schlundschleimhaut-Benetzung, "Biss" und nicht zuletzt Geschmack, anbelangt. Dies betrifft insbesondere Joghurte mit niedrigen Fettgehalten, wie Magerjoghurt, welche trotz dieser niedrigen Fettgehalte eine gute Konsistenz aufweisen.
- Die angeführten sensorisch/organoleptischen Eigenschaften des neuen, unter Einsatz der Nanofiltrationstechnik erhaltenen Joghurt besteht darin, dass durch die selektive Teilentmineralisierung vor allem eine Ausscheidung der Kochsalzbildner Natrium und Chlor erfolgt, was sich auf den Eigengeschmack desselben und in entsprechender Folge auf Dessertprodukte auf Basis dieses neuen Joghurts günstig auswirkt. Gleichzeitig kann der Anteil an zuzusetzendem Zucker bzw. Süßstoff reduziert werden, was z.B. bei den Vanille-, Schoko- und Fruchtjoghurten hinsichtlich Energiewert vorteilhaft ist.
- Ein weiterer Vorteil besteht dann, dass durch den Wegfall des Salzgeschmackes Aromen grundsätzlich besser zur Geltung kommen, ob es sich nun um natürliche, naturidentische oder künstliche Aromen handelt.
- Schließlich kommt es infolge der Verschiebung des Verhältnisses zwischen ein- und mehrwertigen Ionen zu einer Erhöhung der Viskosität, was z.B. bei der Joghurt-Gallerte eine "glatte" Masse und ein angenehmes Mundgefühl verleiht.
- Ein weiterer Vorteil besteht darin, dass die Rohstoffe weniger Bearbeitungsschritten unterworfen werden müssen und dadurch die Qualität wesentlich besser erhalten bleibt, da die Einwirkung von erhöhten Temperaturen und Scherkräften auf das Eiweiß reduziert ist und es zu keiner Begünstigung der Fettoxidation oder von mikrobiologischen Reinfektionsquellen kommt.
- Was noch ein wesentlicher Vorteil des Einsatzes der Nanofiltrationstechnik auf dem erfindungsgegenständlichen Gebiet darstellt, sei folgendes angeführt: Es sind bisher Nachteile nicht bekannt, es kommt z.B. bei Erhitzung zu keinen Änderungen im Denaturierungsverhalten des Eiweißes, des Geschmackes und der Viskosität, die Stabilität des Mineralstoffkomplexes ist nicht beeinflusst, weiters tritt keine Änderung des Kristallisationsverhaltens der Lactose ein und auch das Sedimentationsverhalten ändert sich nicht merklich.
- Wie schon oben ausgeführt, kommt es durch die Nanofiltration zu einer wesentlichen Verschiebung des Verhältnisses von mehrwertigen Ionen und einwertigen Ionen zueinander in Richtung zu Ungunsten der einwertigen Ionen, womit sich das Verhältnis von Gelbildnern zu Solbildnern im Retentat in Richtung zu den Gelbildnern verschiebt.
- Dieses Anwachsen des Gehaltes an Gelbildnern führt dazu, dass bei gleichem Proteingehalt eines Joghurts das Nanofiltrationsprodukt wesentlich erhöhte Konsistenz, also z.B. erhöhte Stichfestigkeit, aufweist.
- Im Umkehrschluss gilt, dass in gesäuerten Milch-Nanofiltrations-Joghurten bei im Vergleich zu bisher bekannten Joghurten gleichbleibender Konsistenz und Stichfestigkeit um bis zu 10 % weniger Proteine enthalten sein können, dass also meist sogar unter Erreichung höherer Qualität im Sinne der Physiologie und der Geschmacks- und Schluck-Empfindung relativ weniger Eiweiß enthalten sein kann, das für andere Zwecke einsetzbar ist, was letztlich zu Einsparungen und auch zur Senkung des Energiewertes (Kaloriengehaltes) führt.

Die technischen Vorteile der Nanofiltration decken sich vielfach auch mit ihren wirtschaftlichen Vorteilen.
- Es erfolgt eine produktschonende und wirtschaftliche Eindickung der Milch ohne Temperaturbelastung, etwa im Verhältnis von 1 : 1,5 bis 1 : 4, durch die Abtrennung des Wassers aus dem Vielkomponentensystem Milch - Molke über die Nanofiltrations-Membran.
- Die Kosten der Wasserverdampfung von Fallstrom-Eindampfungsanlagen liegen etwa 10 bis 15 % höher als bei Einsatz der Nanofiltration. Bei der Umkehrosmose sind die Kosten geringfügig höher als bis gleich wie bei der Nanofiltration, letztere hat aber den Zusatznutzen der gezielt auf die einwertigen Ionen gerichteten Teilentmineralisierung.
- Durch die Aufkonzentration der Milch kann das Milchkonzentrat zur Erhöhung der Trockenmasse bei der Erzeugung von Joghurt und Joghurtdesserts verwendet werden, ohne den Umweg über die - konventionell angewandte - teure Trocknung nehmen zu müssen.
- Bei der selektiven Teilentmineralisierung durch die Nanofiltration verbleiben im Gegensatz zu anderen Entmineralisierungsverfahren (Elektrodialyse, lonentausch) die ernährungsphysiologisch und technologisch erwünschten Mineralstoffanteile der Milch wie Kalzium, Magnesium und Phosphor im Produkt.
- Bei der selektiven Teilentmineralisierung durch die Nanofiltration werden die ernährungsphysiologisch und technologisch unerwünschten Salze wie Natrium und Chlor aus dem Produkt teilweise entfernt: Chlor-Ionen belasten Leber und Nieren und darüber hinaus den gesamten Mineralstoffwechsel. Natrium führt zu erhöhtem Blutdruck und belastet gleichfalls die Nieren. Dazu ist anzumerken, dass die über die Nahrungsmittel aufgenommene Menge an Kochsalz in Mitteleuropa nahezu 100 % über dem tatsächlichen Bedarf liegt. Aus diesem Grund ist die deutliche Reduzierung des NaCl-Gehaltes in dem erfindungsgemäßen Joghurt von großem Vorteil.
- Im Vergleich zu nicht selektiven Entmineralisierungs-Verfahren vermeidet die Nanofiltration den Einsatz von konzentrierten Chemikalien, wie sie z.B. zur Regenerierung von lonentauscher-Harzen und zur Leitwerteinstellung bei der Elektrodialyse erforderlich sind. Die Nanofiltration stellt darüber hinaus das ökologisch sinnvollere und wirtschaftlichere Entmineralisierungsverfahren dar.

Dies gilt in ähnlicher Weise für ein Joghurt, dessen Gehalt an Nichtprotein-Stickstoffverbindungen um die aus dem **Anspruch** 2 hervorgehenden Prozentbereiche abgesenkt sind.

Weiters zeigt erfindungsgemäßes Joghurt, welches - wie in den **Ansprüchen** 3 und 4 geoffenbart - auf Gemischen von Nanofiltrations-Retentaten mit Ausgangs-Milch und/oder mit -Molke beruhen, hinsichtlich seiner Bekömmlichkeit wesentliche Vorzüge gegenüber bisher bekannten analogen Produkten.

Einen weiteren wesentlichen Gegenstand der Erfindung bildet ein neues Verfahren zur Herstellung des neuen Joghurts bzw. eines auf demselben basierenden, mit Zusätzen, wie Aromen, Sirupen, Konfitüren, Früchten, Genussmitteln, Süßungsmitteln u.dgl. versetzten Nahrungsmittel-, bzw. Voll-Dessertprodukts dessen wesentlicher Bestandteil durch bevorzugt pasteurisierte Voll- und/oder Magermilch gebildet ist, welches sich zur Herstellung des neuen Joghurts, wie es oben grundsätzlich und in bevorzugten Ausführungsformen beschrieben sind, besonders eignet.

Das neue Verfahren weist die im kennzeichnenden Teil des **Anspruchs** 5 angeführten Merkmale auf

Im Rahmen der Erfindung weiters bevorzugt ist eine Variante der Herstellung des neuen Joghurts gemäß **Anspruch** 6 unter Einsatz von in ihrem Verhältnis der Menge an einwertigen Ionen zu mehrwertigen Ionen "verschobenen" Nanofiltrations-Retentaten.

Weiters ist es für die Konsistenz und Organoleptik von Joghurt mit höherer Konsistenz, z.B. stichfestes Joghurt, besonders günstig so vorzugehen, wie dies aus dem **Anspruch** 7 hervorgeht.

In diesem Sinne besonders vorteilhaft ist der Einsatz von nanofiltrier Voll- und/oder Magermilch mit einer Zusammensetzung, wie sie bei der bevorzugten Verfahrensform gemäß **Anspruch** 8 vorgesehen ist.

Die Erfindung wird anhand der folgenden Beispiele erläutert:

### Beispiel 1:

Dieses Beispiel erläutert die Herstellung der in einem erfindungsgemäßen Joghurt einzusetzenden, der Nanofiltration unterworfenen Milch:
Nach Übernahme der Rohmilch und deren Lagerung unter Kühlung erfolgt in einer ersten Erhitzerstufe eine Erwärmung von etwa 8°C auf 40°C, danach die Zentnfugation in der Entrahmungszentrifuge, danach in einer zweiten Erhitzerstufe ein Aufheizen von 40°C auf etwa 73°C, eine Heißhaltung für 20 bis 40 Sekunden und dann eine Kühlung auf 4°C, z.B. mittels Wasser/Eiswasser.
Die so erhaltene pasteurisierte Magermilch wird in einer Nanofiltrations-Membrananlage (Membran: Composite-Membran, wie unten angegeben) in etwa 50 % Retentat, also Magermilch-Konzentrat, und etwa 50 % Permeat, also Wasser und Salze, aufgetrennt.
Das Retentat hat beispielsweise folgende Zusammensetzung (pro 1000 g Retentat):

| | |
|---|---|
| 200 g | Trockenmasse |
| 14 g | Asche |
| 0,55 g | Natrium |
| 2,50 g | Kalium |
| 0,23 g | Magnesium |
| 2,70 g | Kalzium |
| 1,94 g | Phosphor |
| 0,93 g | Chlorid |

Dieses Retentat wird dem Sauerungsprozess unterworfen.

Was die oben erwähnte Composite-Membran für die Nanofiltration betrifft, so sind deren Leistungen und Eigenschaftswerte im Folgenden zusammengefasst:
- Material der Composite - Membran:: Vernetztes Polyamid als trenn-aktive Schicht, Polysulfon als Trägerschicht.

Das Rückhaltevermögen dieser Membran beträgt für

| | |
|---|---|
| NaCl | < 5 % |
| CaCl₂ | 30 % |
| Ca₃(PO₄)₂ | 40 - 80 % (pH-abhängig) |
| MgSO₄ | 95 % |
| Zitronensäure | 5 - 90 % (pH-abhängig) |
| Essigsäure | 5 - 90 % (pH-abhängig) |
| Lactose | > 99 % |

Das Rückhaltevermögen nach dem Molekulargewicht beträgt für
Molekulargewichte über 500 g/mol > 95% (worunter z.B. die Proteine fallen),
Molekulargewichte unter 500 g/mol < 5% (worunter z.B. Kochsalz fällt),

| | |
|---|---|
| Maximale Druckbelastbarkeitetwa | 40 bar |
| Empfohlene Druckbelastung | 30 bis 38 bar |
| Maximale Temperaturbelastung | 57°C |
| Empfohlene Temperaturbelastung | 10 bis 50°C, kurzzeitig bis max. 80°C |
| pH-Bereich | 2,3 bis 10°C, kurzzeitig bis max. 80°C |
| Permeationsleistung | 27 L/m²/h bei 50°C |

### Beispiel 2:

Dieses Beispiel zeigt das gesamte erfindungsgemäße Verfahren anhand der Erzeugung eines gerührten Erdbeerjoghurts:

Die angelieferte Rohmilch wird zentrifugiert, pasteurisiert und gekühlt. Ein Anteil der pasteurisierten Milch wird der Nanofiltration auf ca. 20 % Trockenmasse unterworfen. Nach Einstellung der Trockenmasse und des Fettgehaltes auf einen jeweils gewünschten Wert durch Zugabe nicht-nanofiltrierter pasteurisierter Milch erfolgt ein Mischen und Erwärmen auf Homogenisiertemperatur von etwa 60°C.Nach dem Homogenisieren wird auf 90 bis 92°C erhitzt, die Milch etwa 10 bis 20 min bei dieser Temperatur heißgehalten und dann auf Impftemperatur, etwa 42 bis 30°C, gekühlt. Durch Zugabe der entsprechenden Kulturen wird im Verlaufe von etwa 4 bis 12 Stunden die Milch gesäuert, dann auf 20°C gekühlt, gerührt und nach dem Mischen mit der Erdbeer-Fruchtzubereitung in die Joghurtverpackung abgefüllt und gekühlt.

Das so hergestellte Joghurt zeichnet sich durch natürlichen, das natürliche Aroma der Früchte, im vorliegenden Fall frische Erdbeeren, zur vollen Geltung bringende angenehme, aber nicht zu hohe Süße aufweisenden, Geschmack, nicht zur Separierung von flüssiger Phase tendierende, geschmeidige Konsistenz und organoleptisch angenehmes, glattes Mundgefühl aus.

## Patentansprüche

1. Joghurt bzw. darauf basierendes, mit Zusätzen, wie Aromen, Sirupen, Konfituren, Früchten, Genussmitteln, Süßungsmitteln u.dgl. versetztes Nahrungsmittel- bzw., Dessertprodukt, welches mit einer Voll- und/oder Magermilch als Ausgangsprodukt gebildet ist, welcher - bei gleichzeitiger, im wesentlichen voller Aufrechterhaltung ihrer jeweils ursprünglichen Gehalte an Milch-Proteinen, -Zuckern, -Säuren, -Fetten, und -Vitaminen - ein Teil ihrer ursprünglichen Gehalte an Salzen entzogen ist, **dadurch gekennzeichnet,**
- **dass** es mit einer teil-entmineralisierten bzw. -entsalzten Voll- und/oder Magermilch gebildet ist, deren Gehalt an einwertigen Ionen, nämlich an Natrium-, Kalium- und Chlorid-Ionen, im Vergleich zu den Gehalten an übrigen Mineralstoffen bzw. Salzen im Ausgangsprodukt wesentlich stärker reduziert ist als jener an mehrwertigen Ionen,
- wobei der Voll- und/oder Magermilch durch Einsatz der Nanofiltrations-(Ultraosmose-)Technik ein wesentlicher Teil der ursprünglichen bzw. natürlichen Gehalte an einwertigen Ionen sowie an Nichtprotein-Stickstoffverbindungen entzogen ist, dieselbe also ein Voll- bzw. Magermilch-Nanofiltrations-Retentat ist und
- in dem Joghurt der Gehalt an Natrium-Ionen um 10 bis 60 %, jener an Chlorid-Ionen um 10 bis 60 %, jener an Kalium-lonen um 5 bis 50 %, der Gehalt an Nichtprotein-Stickstoffverbindungen um 5 bis 40 % und jener an Harnstoff um 10 bis 50 % gegenüber den Gehalten an diesen Ionen und Verbindungen im jeweils entsprechend gleichen, bisher bekannten und handelsüblichen Joghurt herabgesetzt sind.

2. Joghurt bzw. darauf basierendes Nahrungsmittel- bzw. Dessertprodukt nach Anspruch 1, **dadurch gekennzeichnet, dass** dessen Gehalt an Natrium-Ionen um 10 bis 20 %, jener an Chlorid-Ionen um 15 - 30 %, jener an Kalium-Ionen um 5 bis 20%, jener an Nichtprotein-Stickstoffverbindungen um 5 bis 20 % und jener an Harnstoff um 15 bis 30 % gegenüber den Gehalten an diesen Ionen im jeweils entsprechend gleichen, bisher bekannten und handelsüblichen gesäuerten Milchprodukt herabgesetzt sind.

3. Joghurt bzw. darauf **basierendes** Nahrungmittel- bzw. Dessertprodukt nach Anspruch 1 oder 2, **dadurch gekennzeichnet, dass** es als Naturjoghurt bzw. als Fruchtjoghurt-Grundlage durch ein mittels einer entsprechenden Joghurt-Kultur gesäuertes Gemisch von nanofiltrierter Magermilch bzw. von Magermilch-Nanofiltrations-Retentat mit einem **Feststoffgehalt** von 12 bis 22 %, bevorzugt von 17 bis 20 %, einem Fettgehalt von unter 0,8% und einem Gehalt an einwertigen Ionen von unter 0,25%, und von pasteurisierter Vollmilch mit einem Fettgehalt im Bereich von 3 bis 6 %, vorzugsweise von 3,2 bis 4,8 %, gebildet ist, wobei das Masse-Verhältnis von Magermilch-Nanofiltrations-Retentat zu Vollmilch von 80 : 20 bis 20 : 80, insbesondere von 60 : 40 bis 40 : 60, beträgt.

4. Joghurt bzw. darauf basierendes Nahrungsmittel - bzw. Dessertprodukt nach Anspruch 1 oder 2, **dadurch gekennzeichnet, dass** es als Diät- bzw. Mager-Naturjoghurt bzw. als Frucht-Diät- bzw. Magerjoghurt-Grundlage durch ein mittels einer entsprechenden Joghurt-Kultur gesäuertes Gemisch von nanofiltrierter Magermilch bzw. Magermilch-Nanofiltrations-Retentat mit einem Feststoffgehalt von 12 bis 22 %, bevorzugt von 17 bis 20 %, einem Fettgehalt von unter 0,8 % und einem Gehalt an einwertigen Ionen von unter 0,25 %, und von pasteurisierter Magermilch gebildet ist, wobei das Masse-Verhältnis von Magermilch-Nanofiltrations-Retentat zu Magermilch von 80 : 20 bis 20 : 80, vorzugsweise von 60 : 40 bis 40 : 60, beträgt.

5. Verfahren zur Herstellung eines Joghurts bzw. eines auf Joghurt basierenden, mit Zusätzen, wie Aromen, Sirupen, Konfitüren, Früchten, Genussmitteln, Süßungsmitteln u.dgl. versetzten Nahrungsmittel- bzw. Dessertproduktes, dessen wesentlicher Bestandteil durch, bevorzugt pasteurisierte, Milch und/oder Magermilch gebildet ist, gemäß einem der Ansprüche 1 bis 4, **dadurch gekennzeichnet, dass**
- eine Voll- und/oder Magermilch, welche mittels Nanofiltration einer bezüglich Natrium- und Chlorid- sowie Kaliumlonen selektiven Demineralisierung unterworfen worden ist
- zur Einstellung jeweils gewünschter Fett- und Eiweißgehalte, Viskositätswerte und sonstiger Eigenschaftswerte, wie Stichfestigkeit, Konsistenz, Geschmeidigkeit, Glätte od.dgl. mit Voll-und/oder Magermilch und/oder Molke und/oder (Mager-) Milch- und/oder Molkepulver gemischt und homogenisiert wird und
- das erhaltene Gemisch nach eventueller nochmaliger Homogenisierung und nach Erhitzung,
- mit einer jeweils vorgesehenen Säuerungs-Kultur beimpft und nach eventueller Vorreifung der Reifung unterworfen wird, wonach
- die Finalisierung, gegebenenfalls unter Zugabe der eingangs erwähnten Zusätze, vorgenommen wird.

6. Verfahren nach Anspruch 5, **dadurch gekennzeichnet, dass** ein Voll- und/oder Magermilch-Nanofiltrations-Retentat eingesetzt wird, dessen Gehalt an Natrium-Ionen um zumindest 20 bis 75 %, bevorzugt um 30 bis 50 %, jener an Chloridlonen um 30 bis 80 %, bevorzugt um 40 bis 65 %, und jener an Kalium-Ionen um 10 bis 60 %, bevorzugt um zumindest 20 bis 40 %, gegenüber dem ursprünglichen bzw. natürlichen Gehalt dieser einwertigen Ionen im jeweils zum Einsatz gelangenden Milch- bzw. Magermilch-Ausgangsprodukt herabgesetzt ist.

7. Verfahren nach Anspruch 5 oder 6, **dadurch gekennzeichnet, dass**
- eine Voll- und/oder Magermilch, welche mittels Nanofiltration (Ultraosmose) einer bezüglich Natrium- und Kalium- sowie Chlorid-lonen selektiven Demineralisierung sowie einer Reduktion des Nichtprotein-Stickstoff-Gehalts unterworfen worden ist,
- zur Einstellung jeweils gewünschter Fett- und Eiweißgehalte, Viskositätswerte und sonstiger Eigenschaftswerte, wie Stichfestigkeit, Konsistenz, Geschmeidigkeit, Glätte od.dgl. mit Voll- und/oder Magermilch und/oder Molke und/oder (Mager-) Milch- und/oder Molkepulver gemischt und homogenisiert wird und
- dass das erhaltene Gemische nach eventueller nachmaliger Homogenisierung und nach Erhitzung mit einer jeweils vorgesehenen Säuerungs-Kultur beimpft und nach eventueller Vorreifung der Reifung unterworfen wird, wonach
- die Finalisierung, gegebenenfalls unter Zugabe der eingangs erwähnten Zusätze, vorgenommen wird.

8. Verfahren nach einem der Ansprüche 5 bis 7, **dadurch gekennzeichnet, dass** ein Voll-und/oder Magermilch-Nanofiltrations-Retentat eingesetzt wird, dessen Gehalt an Nichtprotein-Stickstoffverbindungen um 10 bis 50 %, bevorzugt um 15 bis 35 %, und dessen Gehalt an Harnstoff um 25 bis 70%, bevorzugt um 40 bis 60 %, gegenüber dem ursprünglichen bzw. natürlichen Gehalt dieser Verbindungen im jeweils zum Einsatz gelangenden Milch- bzw. Magermilch-Ausgangsprodukt herabgesetzt ist.

## Claims

1. Yoghurt, or food or dessert product based on it and mixed with additives, such as flavours, syrups, jams, fruits, semi-luxuries, sweeteners and the like, the product being formed from full-cream milk and/or skimmed milk as an initial product, of which part of its original contents of salts are removed, while simultaneously substantially completely maintaining its respective original contents of milk proteins, lactose, lactic acids, milk fats and milk vitamins, **characterised in**
- **that** it is formed from a partially demineralised or desalted full-cream and/or skimmed milk, of which the content of monovalent ions, i.e. of sodium, potassium and chloride ions is substantially more reduced, as compared with the contents of other minerals or salts in the initial product, than that of multivalent ions,
- a substantial part of the original or natural contents of monovalent ions as well as of non-protein nitrogen compounds being removed from said full-cream and/or skimmed milk by a nano-filtration (ultra-osmosis) technique so that it is a nanofiltration residue of full-cream and/or skimmed milk, and
- where in said yoghurt, the content of sodium ions is reduced by 10 to 60 %, that of chloride ions is reduced by 10 to 60 %, that of potassium ions by 5 to 50 %, the content of non-protein nitrogen compounds is reduced by 5 to 40 % and that of urea is reduced by 10 to 50 % in relation to the contents of these ions and compounds in a respective correspondingly similar commercial yoghurt as known up to now.

2. Yoghurt or food or dessert product based on it according to claim 1, **characterised in that** its content of sodium ions is reduced by 10 to 20 %, that of chloride ions by 15 - 30 %, that of potassium ions by 5 to 20 %, that of non-protein nitrogen compounds by 5 to 20 % and that of urea by 15 to 30 % in relation to the contents of these ions in a respective correspondingly similar commercial acidified milk product as known up to now.

3. Yoghurt or food or dessert product based on it according to claim 1 or 2, **characterised in that** it is formed as a natural yoghurt or as a base for a fruit yoghurt by a mixture, acidified by means of an appropriate yoghurt culture, of nano-filtrated skimmed milk or a nano-filtration residue of skimmed milk having a solid matter content of 12 to 22 %, preferably 17 to 20 %, a fat content below 0.8%, and a content of monovalent ions below 0.25%, and of pasteurised full-cream milk having a fat content in the range of 3 to 6 %, preferably of 3.2 to 4.8 %, the mass proportion of the nano-filtration residue of skimmed milk to full-cream milk amounting to 80 : 20 up to 20 : 80, particularly to 60 : 40 up to 40 : 60.

4. Yoghurt or food or dessert product based on it according to claim 1 or 2, **characterised in that** it is formed as a dietary or skimmed natural yoghurt or as a base for a fruit dietary or skimmed yoghurt by a mixture, acidified by means of an appropriate yoghurt culture, of nano-filtrated skimmed milk or a nano-filtration residue of skimmed milk, having a content of solid matter of 12 to 22 %, preferably 17 to 20 %, a fat content below 0.8 % and a content of monovalent ions below 0.25 %, and of pasteurised skimmed milk, the mass proportion of the nano-filtration residue of skimmed milk to the skimmed milk amounting to 80 : 20 up to 20 : 80, preferably to 60 : 40 up to 40 : 60.

5. A process for producing a yoghurt or of a food or dessert product based on it and mixed with additives, such as flavours, syrups, jams, fruits, semi-luxuries, sweeteners and the like, the substantial component of which being formed by, preferably pasteurised, milk and/or skimmed milk, according to any of claims 1 to 4, **characterised in that**
- full-cream milk and/or skimmed milk, which has been subjected to a selective demineralisation regarding sodium and chloride ions as well as potassium ions,
- is mixed and homogenised with full cream milk and/or skimmed milk and/or whey and/or (skimmed) milk powder and/or whey powder for adjusting respectively desired contents of fat and albumin, viscosity values and other characteristic values, such as puncture proofness, consistency, suppleness, smoothness or the like, wherein
- the mixture obtained, after optional renewed homogenisation and after heating,
- is inoculated with an acidification culture respectively provided and is subjected to ripening, optionally after a pre-ripening procedure, after which
- a finalisation is effected, optionally under addition of the additives mentioned at the outset.

6. Process according to claim 5, **characterised in that** a nano-filtration residue of full-cream milk or skimmed milk is used, whose content of sodium ions is reduced by at least 20 to 75 %, preferably by 30 to 50 %, that of chloride ions by 30 to 80 %, preferably 40 to 65 %, and that of potassium ions by 10 to 60 %, preferably by at least 20 to 40 %, in relation to the original or natural contents of these monovalent ions in the initial product of milk or skimmed milk respectively used.

7. Process according to claim 5 or 6, **characterised in that**
- full-cream milk and/or skimmed milk, which has been subjected to a selective demineralisation regarding sodium and potassium ions as well as chloride ions by means of nano-filtration (ultra-osmosis), as well as to a reduction of the non-protein nitrogen content,
- is mixed and homogenised with full cream milk and/or skimmed milk and/or whey and/or (skimmed) milk powder and/or whey powder for adjusting respectively
- desired contents of fat and albumin, viscosity values and other characteristic values, such as puncture proofness, consistency, suppleness, smoothness or the like, and
- that the mixture obtained, after optional renewed homogenisation and after heating,
is inoculated with an acidification culture respectively provided and is subjected to ripening, optionally after a pre-ripening procedure, after which
- a finalisation is effected, optionally under addition of the additives mentioned at the outset.

8. Process according to any of claims 5 to 7, **characterised in that** a nano-filtration residue of full-cream milk and/or skimmed milk is used, whose contents of non-protein nitrogen compounds is reduced by 10 to 50 %, preferably by 15 to 35 %, and whose content of urea is reduced by 25 to 70 %, preferably by 40 to 60 %, in relation to the original or natural contents of these compounds in the initial product of milk or skimmed milk respectively used.

## Revendications

1. Yogourt ou produit alimentaire ou de dessert basé sur ceci et mélangé avec des additions, comme des arômes, des sirops, des confitures, des fruits, des stimulants, des édulcorants et pareil, qui est formé de lait non écrémé et/ou de lait écrémé comme produit de base, dont une partie du teneur original des sels est enlevée, tout en maintenant en même temps essentiellement complètement les teneurs de protéines de lait, des sucres de lait, des acides lactiques, des lipides de lait et des vitamines de lait, **caractérisé en ce**
- **qu'**il est formé d'un lait non écrémé et/ou d'un lait écrémé, qui sont partiellement déminéralisés ou dessalés, dont le teneur des ions monovalents, à savoir des ions de sodium, de potassium et de chlorure, en comparaison avec les teneurs des autres matériaux minéraux ou sels dans le produit de base, sont réduits plus considérablement que ceux-ci des ions à plusieurs valences,
- où une partie essentielle des teneurs originaires et naturels des ions monovalents ainsi que des composés d'azote non protéiques est enlevée du lait non écrémé et/ou écrémé par utilisation de la technique nano-filtration (technique ultra-osmotique) de manière qu'il soit un rétentat de nano-filtration du lait non écrémé ou du lait écrémé, et
- où on a réduit le teneur des ions de sodium dans le yogourt pour 10 à 60 %, ceci des ions de chlorure pour 10 à 60 %, ceci des ions de potassium pour 5 à 50 %, ceci des composés d'azote non protéiques pour 5 à 40 % et ceci d'urée pour 10 à 50 % en relation avec les teneurs de ces ions dans le yogourt respectif pareil correspondant, connu jusqu'à présent au marché.

2. Yogourt ou produit alimentaire ou de dessert basé sur ceci selon la revendication 1, **caractérisé en ce que** son teneur en ions de sodium est réduit pour 10 à 20%, ceci des ions de chlorure pour 15 - 30 %, ceci des ions de potassium pour 5 à 20 %, le teneur des composés d'azote non protéiques pour 5 à 20 % et ceci d'urée pour 15 à 30 % en relation avec les teneurs de ces ions et composés dans le produit laiteux acidulé respectif pareil correspondant, connu jusqu'à présent au marché.

3. Yogourt ou produit alimentaire ou de dessert basé sur ceci selon la revendication 1 ou 2, **caractérisé en ce qu'**il est formé comme yogourt naturel ou comme base de yogourt à fruits par un mélange, acidulé au moyens d'une culture de yogourt appropriée, de lait écrémé nano-filtré ou d'un rétentat de nano-filtration du lait écrémé ayant un teneur en matière solide de 12 à 22 %, préférablement de 17 à 20 %, un teneur en graisse au dessous de 0,8%, et un teneur des ions monovalents au dessous de 0,25%, et du lait non écrémé pasteurisé ayant un teneur en graisse dans la fourchette de 3 à 6 %, préférablement de 3,2 à 4,8 %, la proportion des masses du rétentat de nano-filtration du lait écrémé au lait non écrémé, étant 80 : 20 à 20 : 80, particulièrement 60 : 40 à 40 : 60.

4. Yogourt ou produit alimentaire ou de dessert basé sur ceci selon la revendication 1 ou 2, **caractérisé en ce qu'**il est formé comme yogourt de diète ou comme yogourt naturel écrémé ou comme base de yogourt de diète à fruits ou de yogourt écrémé par un mélange, acidulé au moyens d'une culture de yogourt appropriée, de lait écrémé nano-filtré ou d'un rétentat de nano-filtration du lait écrémé ayant un teneur en matière solide de 12 à 22 %, préférablement de 17 à 20 %, un teneur en graisse au dessous de 0,8%, et un teneur des ions monovalents au dessous de 0,25%, et du lait écrémé pasteurisé, la proportion des masses du rétentat de nano-filtration du lait écrémé au lait écrémé étant 80 : 20 à 20 : 80, particulièrement 60 : 40 à 40 : 60.

5. Procédé de fabrication d'un yogourt ou d'un produit alimentaire ou de dessert basé sur yogourt et mélangé avec des additions, comme des arômes, des sirops, des confitures, des fruits, des stimulants, des édulcorants ou pareil, dont le composant essentiel est formé par le lait, préférablement pasteurisé, et/ou le lait écrémé, selon une quelconque des revendications 1 à 4, **caractérisé en ce, que**
- du lait non écrémé et/ou écrémé, soumis à une déminéralisation sélective par rapport aux ions de sodium, de chlorure et de potassium au moyens d'une nanofiltration,
- est mélangé et homogénéisé pour ajuster des teneurs respectivement désirés en graisse et en albumen, des valeurs de viscosité et des autres valeurs caractéristiques, comme la fouillabilité, la consistance, la souplesse, le lissé ou pareil, avec du lait non écrémé et/ou écrémé et/ou du petit-lait et/ou du poudre de lait et/ou de petit-lait, et
- que le mélange obtenu, après une homogénéisation éventuelle répétée et après un réchauffage,
- est inoculé avec une culture d'acidulation prévue respectivement, et est soumis d'une procédure de maturité, après une pré-maturisation éventuelle, après quoi
- on effectue la finalisation, le cas échéant en ajoutant les additions mentionnées au commencement.

6. Procédé selon la revendication 5, **caractérisé en ce que** l'on utilise un rétentat de nano-filtration du lait non écrémé et/ou écrémé, dont le teneur en ions de sodium est réduit pour au moins 20 à 75%, préférablement pour 30 à 50 %, ceci des ions de chlorure pour 30 à 80 %, préférablement pour 40 à 65 %, et ceci des ions de potassium pour 10 à 60 %, préférablement pour au moins 20 à 40 %, en relation avec les teneurs originaires ou naturels de ces ions monovalents dans le produit de base de lait ou de lait écrémé respectivement utilisé.

7. Procédé selon la revendication 5 ou 6, **caractérisé en ce que**
- du lait non écrémé et/ou écrémé, soumis à une déminéralisation sélective par rapport aux ions de sodium et de potassium ainsi que de chlorure au moyens d'une nano-filtration (ultra-osmose) ainsi qu'à une réduction du teneur d'azote non protéique,
- est mélangé et homogénéisé pour ajuster des teneurs respectivement désiré en graisse et en albumen, des valeurs de viscosité et des autres valeurs caractéristiques, comme la fouillabilité, la consistance, la souplesse, le lissé ou pareil, avec du lait non écrémé et/ou écrémé et/ou du petit-lait et/ou du poudre de lait et/ou de petit-lait, et
- que le mélange obtenu, après une homogénéisation éventuelle répétée et après un réchauffage,
est inoculé avec une culture d'acidulation prévue respectivement, et est soumis d'une procédure de maturité, après une pré-maturisation éventuelle, après quoi
- on effectue la finalisation, le cas échéant en ajoutant les additions mentionnées au commencement.

8. Procédé selon une quelconque des revendications 5 à 7, **caractérisé en ce que** l'on utilise un rétentat de nano-filtration du lait non écrémé et/ou écrémé, dont le teneur en composés d'azote non protéiques est réduit 10 à 50 %, préférablement pour 15 à 35 %, et dont le teneur en urée est réduit pour 25 à 70 %, préférablement pour 40 à 60 %, en relation avec les teneurs originaires ou naturels de ces composés dans le produit de base de lait ou de lait écrémé respectivement utilisé.
